# FASCICULE DE BREVET EUROPEEN

(11) **EP 2 961 656 B1**
(45) Date de publication et mention de la délivrance du brevet: **01.01.2020**
(21) Numéro de dépôt: 14713188.2
(22) Date de dépôt: 26.02.2014
(51) Int. Cl.: B64G 1/00, B64G 1/40, B64G 1/64, F02K 9/34, F03H 1/00

(54) **MODULE DE PROPULSION SPATIALE A PROPULSION ELECTRIQUE ET CHIMIQUE A PROPERGOL SOLIDE**
WELTRAUMANTRIEBSMODUL MIT ELEKTRISCHEM UND CHEMISCHEM FESTSTOFFANTRIEB
SPACE PROPULSION MODULE HAVING ELECTRIC AND SOLID-FUEL CHEMICAL PROPULSION

(30) Priorité: 26.02.2013 FR 1351698
(43) Date de publication de la demande: 06.01.2016
(73) Titulaire: Safran Aircraft Engines, 75015 Paris (FR); Safran Ceramics, 33185 Le Haillan (FR)
(72) Inventeur: DUCHEMIN, Olivier, Bernard, F-78114 Magny Les Hameaux (FR); INDERSIE, Dominique, F-27200 Vernon (FR); CAUBET, Pascal, Benoît, F-33185 Le Haillan (FR); YVART, Pierre, F-91610 Ballancourt Sur Essonne (FR)
(74) Mandataire: Cabinet Beau de Loménie
(86) Numéro de dépôt international: PCT/FR2014/050412
(87) Numéro de publication internationale: WO 2014/131990

(56) Documents cités:
- EP-A1- 0 665 162
- EP-A2- 1 059 231
- WO-A1-99/00300
- FR-A1- 2 775 251
- FR-A1- 2 829 104
- FR-A1- 2 980 177
- FR-A1- 2 986 213
- JP-A- 2000 128 094
- US-A1- 2005 109 878
- OH D Y ET AL: "END-TO-END OPTIMIZATION OF CHEMICAL-ELECTRIC ORBIT-RAISING MISSIONS", JOURNAL OF SPACECRAFT AND ROCKETS, AMERICAN INSTITUTE OF AERONAUTICS AND ASTRONAUTICS,REASTON,VA, US, vol. 41, no. 5, 1 septembre 2004 (2004-09-01), pages 831-839, XP001210184, ISSN: 0022-4650

## Description

### DOMAINE DE L'INVENTION

Le présent exposé concerne un module de propulsion spatiale.

Un tel module de propulsion spatiale peut équiper des engins spatiaux tels que des satellites, des sondes, ou encore des étages supérieurs de fusée pour ne citer que ces exemples. Il est notamment particulièrement utile pour assurer des transferts d'orbite.

### ETAT DE LA TECHNIQUE ANTERIEURE

Les satellites et autres engins spatiaux sont habituellement équipés de propulseurs permettant leur manœuvre dans l'espace. En particulier, il est fréquent que les lanceurs n'amènent pas directement leurs charges utiles jusqu'à leurs orbites nominales de fonctionnement qui sont parfois très éloignées. Les lanceurs libèrent alors leurs charges utiles sur une orbite de transfert elliptique dont le périgée est relativement proche de la Terre tandis que l'apogée se situe à l'altitude de l'orbite de fonctionnement : dès lors, ce sont les propulseurs de l'engin spatial qui sont chargés de corriger sa trajectoire pour rejoindre l'orbite de fonctionnement prévue.

Ces propulseurs sont fréquemment des propulseurs chimiques à ergols liquides : ces propulseurs chimiques sont capables d'offrir des accélérations importantes de l'ordre de plusieurs g ou dizaines de g mais souffrent d'une impulsion spécifique assez faible. L'impulsion spécifique (Isp) est proportionnelle au rapport entre la poussée du propulseur et le débit massique de matière éjectée : il traduit donc d'une certaine manière l'efficacité énergétique du propulseur. Les engins spatiaux ainsi équipés atteignent donc rapidement leurs orbites de fonctionnement mais embarquent une plus grande masse de carburant, ce qui augmente significativement le coût du lancement.

Toutefois, depuis quelques années, des propulseurs électriques ont été développés : ces propulseurs produisent une poussée par accélération et éjection de particules chargées, des ions notamment. Ces propulseurs électriques présentent une impulsion spécifique bien meilleure, environ 5 à 10 fois plus grande que celle des propulseurs chimiques. Ils fournissent en revanche des accélérations très faibles, de l'ordre de 10⁻⁵ g. Les engins spatiaux ainsi équipés embarquent donc moins de carburant, ce qui permet de satelliser une charge utile plus importante ou de réduire les coûts de lancement. En revanche, la mise à poste prend beaucoup plus de temps, en général de l'ordre de 8 à 9 mois, et retarde donc la mise en œuvre du satellite, ce qui représente un fort inconvénient commercial. En outre, la correction de trajectoire étant plus lente, l'engin spatial navigue à de nombreuses reprises durant une période importante au sein de la ceinture de radiations de Van Allen qui coupe l'orbite de transfert : l'engin est ainsi exposé à un risque élevé d'endommagement par les radiations et nécessite donc un blindage particulier.

Le document FR 2 775 251 qui décrit un système de propulsion spatial comportant un propulseur principal chimique et des dispositifs de propulsion électriques est considéré comme le document de l'art antérieur le plus proche.

Il existe donc un réel besoin pour un engin spatial d'un nouveau type muni d'une propulsion qui soit dépourvue, au moins en partie, des inconvénients inhérents aux propulsions connues précitées.

### PRESENTATION DE L'INVENTION

Le présent exposé concerne un module de propulsion spatiale selon la revendication 1, comprenant un propulseur chimique à propergol solide, possédant un corps principal, et au moins un propulseur électrique, ledit au moins un propulseur électrique étant monté sur ledit corps principal du propulseur chimique à propergol solide ainsi qu'autre module de propulsion spatiale selon la revendication 6.

Les propulseurs chimiques à propergol solide, également appelés ci-après propulseurs solides, proposent une gamme de poussée comparable à celle des propulseurs chimiques à ergols liquides : ils se substituent donc facilement aux propulseurs liquides dans un usage de type forte poussée, notamment en tant que propulseur principal d'un engin spatial. Ils s'utilisent ainsi avantageusement lorsque les manœuvres doivent être rapidement exécutées : il peut s'agir par exemple d'une manœuvre de sortie d'un environnement néfaste pour l'engin comme celui des ceintures de radiations de Van Allen par exemple, ou d'une manœuvre d'urgence.

De plus, les propulseurs solides sont moins complexes, plus simples de mise en œuvre, et donc moins coûteux que leurs homologues liquides. Le stockage, notamment, d'un propergol solide est simplifié : en particulier, celui-ci ne nécessite pas de réservoirs pressurisés, de conduites d'amenée, de vannes d'isolement ou de régulation, ou de préchauffeur. Il n'impose pas non plus un stockage séparé de deux ergols, ni un dispositif permettant leur mélange avant la combustion. Outre une simplicité accrue, ces propulseurs solides réduisent la masse des équipements emportés augmentant d'autant la masse utile disponible de l'engin, ce qui est un autre avantage économique important. En outre, la toxicité des propergols solides est généralement moindre que celle des ergols liquides, ce qui les rend donc moins sujets à des restrictions environnementales.

Les propulseurs électriques fournissent quant à eux une poussée beaucoup plus faible mais offrent une Isp plus importante : ils se substituent donc avantageusement aux propulseurs chimiques pour des manœuvres peu contraintes en durée dans lesquelles l'engin ne verra son vecteur vitesse significativement altéré qu'au bout d'une durée plus importante.

Le module de propulsion combine ainsi les avantages des propulseurs solides et des propulseurs électriques tout en réduisant l'impact de leurs défauts respectifs en tirant profit des spécificités des différentes manœuvres à exécuter.

Dans le contexte des manœuvres de transfert d'orbite par exemple, un tel module de propulsion est ainsi particulièrement avantageux puisqu'il peut utiliser alternativement sa propulsion solide ou sa propulsion électrique pour profiter d'une forte poussée ou au contraire d'une Isp importante en fonction de sa position, vis-à-vis des ceintures de Van Allen par exemple, ou des caractéristiques de sa trajectoire. Un tel module permet ainsi la mise à poste d'une charge utile plus importante en conservant une durée de transfert raisonnable ne retardant que peu ou pas du tout la mise en œuvre du satellite, cette durée de transfert n'excèdent généralement pas 2 ou 3 mois. Naturellement, le cas échéant, il est également possible d'utiliser simultanément les propulsions solide et électrique.

Enfin, une telle configuration dans laquelle le propulseur électrique est monté sur le corps principal du propulseur chimique à propergol solide est particulièrement compacte et offre au module de propulsion une forte intégration qui renforce son caractère de module autonome apte à équiper sans modifications substantielles une large gamme d'engins spatiaux nécessitant une telle fonction de propulsion.

Selon l'invention, le corps principal du propulseur chimique à propergol solide est réalisé en matériau composite. Une telle catégorie de matériaux permet en effet un gain de masse important, ce qui permet d'embarquer une masse utile d'autant plus importante. Plusieurs modes de réalisation sont décrits ci-dessus. Cependant, seuls les modes de réalisation comportant toutes les caractéristiques des revendications font partie de l'invention.

Dans certains modes de réalisation le propulseur chimique à propergol solide comprend un chargement de combustible, stocké dans le corps principal, une tuyère d'éjection, et un boîtier d'alimentation et de régulation électronique.

Dans certains modes de réalisation, la tuyère d'éjection du propulseur chimique à propergol solide est orientable. Elle peut ainsi être avantageusement équipée de deux vérins électromécaniques permettant la commande de la trajectoire en lacet et tangage.

Dans le mode de réalisation selon la revendication 1, le propulseur électrique est monté sur le corps principal du propulseur chimique à propergol solide par l'intermédiaire d'une structure de fixation comprenant une bride supérieure, pourvue au niveau de l'extrémité supérieure du corps principal du propulseur chimique à propergol solide, et une bride inférieure pourvue au niveau de l'extrémité inférieure du corps principal du propulseur chimique à propergol solide. La mise en place de ces brides permet de regrouper la plupart des fixations dans des zones de taille restreinte ce qui permet une meilleure rationalisation d'ensemble avec notamment une meilleure gestion des contraintes mécaniques causées par la fixation du propulseur électrique sur le propulseur solide. En particulier, il est possible de munir ces brides d'une structure et/ou d'une géométrie apte à supporter, voire amortir (en vibration), ces efforts mécaniques sans endommager le corps principal du propulseur solide.

Dans certains modes de réalisation, la bride supérieure est une bride cylindrique de cerclage montée sur le corps principal.

Dans certains modes de réalisation, la bride supérieure est une bride annulaire montée sur une jupe supérieure du corps principal du propulseur chimique à propergol solide.

Dans d'autres modes de réalisation, la bride supérieure est une bordure faisant saillie le long d'un contour supérieur du corps principal du propulseur chimique à propergol solide. Avantageusement, il peut s'agir alors d'une simple surépaisseur de la paroi latérale du corps principal prévue le long du bord supérieur de ce dernier.

Dans certains modes de réalisation, la bride inférieure est une bride cylindrique de cerclage montée sur le corps principal. Cette bride cylindrique peut ainsi être montée facilement, par cerclage notamment, autour du corps principal sans endommager ce dernier.

Dans certains modes de réalisation, la bride inférieure est une bride cylindrique de cerclage montée sur une jupe inférieure du corps principal.

Dans d'autres modes de réalisation, la bride inférieure est une bordure faisant saillie le long d'un contour inférieur du corps principal du propulseur chimique à propergol solide.

Dans certains modes de réalisation, le propulseur électrique comprend un organe de propulsion électrique et un réservoir de fluide propulsif. L'organe de propulsion peut être de tout type connu et notamment du type à plasma stationnaire ; le fluide propulsif peut être de différentes natures et notamment du xénon, du krypton, de l'argon ou un mélange de ces éléments.

Dans certains modes de réalisation, le propulseur électrique comprend en outre un étage de régulation de pression prévu entre le réservoir de fluide propulsif et l'organe de propulsion électrique.

Dans certains modes de réalisation, l'organe de propulsion électrique est fixé sur la bride inférieure et orienté vers l'arrière du module. Cette position permet de propulser le module vers l'avant tout en réduisant le risque de projection de particules issues de l'organe de propulsion électrique sur le propulseur solide.

Dans certains modes de réalisation, le réservoir de fluide propulsif est fixé entre les brides inférieure et supérieure.

Dans certains modes de réalisation, le module comprend en outre un système de commande d'orientation sur au moins un axe comprenant au moins un propulseur à gaz. Un tel système de commande peut notamment assurer la stabilité de la trajectoire en roulis. Ce propulseur peut être indifféremment à gaz froids ou chauds.

Dans certains modes de réalisation, le propulseur à gaz est fixé sur la bride inférieure et orienté tangentiellement à ladite bride inférieure.

Dans certains modes de réalisation, le gaz utilisé par le propulseur à gaz est le même fluide propulsif utilisé par le propulseur électrique et provient alors du réservoir de fluide propulsif du propulseur électrique.

Dans d'autres modes de réalisation, le gaz utilisé par le propulseur à gaz est distinct du fluide propulsif et provient d'un réservoir spécifique. Il peut notamment s'agir d'un réservoir d'azote.

Dans certains modes de réalisation, la bride supérieure est munie d'une interface mécanique supérieure apte à être connectée à un engin spatial tel un satellite.

Dans certains modes de réalisation, la bride inférieure est munie d'une interface mécanique inférieure apte à être connectée à un lanceur spatial.

Dans certains modes de réalisation, les diamètres des interfaces mécaniques supérieure et inférieure sont identiques. Grâce à ces interfaces, le module propulsif peut être inséré aisément et sans adaptation supplémentaire substantielle, entre un satellite et un lanceur lors de la préparation de la mission.

Dans le mode de réalisation selon la revendication 6, le propulseur électrique est monté sur le corps principal du propulseur chimique à propergol solide par l'intermédiaire d'une structure de châssis fixée autour du propulseur chimique à propergol solide. Une telle structure offre une grande liberté de fixation du propulseur électrique et d'éventuels organes auxiliaires autour du propulseur solide, la structure de châssis pouvant quant à elle être fixée sur le corps principal du propulseur solide en un nombre réduit de points dans des zones peu sensibles de manière à ne pas endommager ce dernier. En outre, une telle structure de châssis formant interface entre le propulseur électrique et le propulseur solide permet un découplage plus important entre les sollicitations mécaniques générées par chaque propulseur. Dans un tel cas, il est alors possible d'utiliser sans adaptation substantielle un propulseur solide préexistant.

Dans ce mode de réalisation, la structure de châssis possède une géométrie tronconique ou cylindrique.

Dans certains modes de réalisation, l'organe de propulsion électrique est fixé sur la paroi intérieure de la structure de châssis et orienté vers l'arrière du module. La disposition interne de l'organe de propulsion électrique vis-à-vis de la structure de châssis permet d'une part d'éviter la projection de particules sur la structure de châssis et d'autre part de bénéficier de plus de place sur la surface extérieure pour la fixation d'éventuels organes auxiliaires.

Dans certains modes de réalisation, le réservoir de fluide propulsif est fixé sur la paroi extérieure de la structure de châssis. Il est de préférence fixé tangentiellement par rapport à la direction principale du châssis qui coïncide avec la direction principale du module.

Dans certains modes de réalisation, le propulseur à gaz du système de commande d'orientation sur au moins un axe est fixé sur la paroi extérieure de la structure de châssis et orienté tangentiellement par rapport à la direction principale du module.

Dans certains modes de réalisation, la structure de châssis comprend une portion supérieure de support munie à son extrémité supérieure d'une interface mécanique supérieure apte à être connectée à un engin spatial tel un satellite.

Dans certains modes de réalisation, la structure de châssis comprend une portion inférieure tronconique d'adaptation, s'évasant depuis la portion supérieure, munie à son extrémité inférieure d'une interface mécanique inférieure apte à être connectée à un lanceur spatial. Grâce à ces interfaces, le module propulsif peut se substituer aisément à l'adaptateur de transition de diamètre habituellement nécessaire entre les interfaces d'un lanceur et d'un engin spatial tel un satellite.

Dans certains modes de réalisation, le module propulsif comprend en outre des moyens de production électrique, de communication et de navigation lui permettant de fonctionner en autonomie.

Les caractéristiques et avantages précités, ainsi que d'autres, apparaîtront à la lecture de la description détaillée qui suit, d'exemples de réalisation du module proposé. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est une vue de profil d'un premier exemple de module propulsif.
La FIG 2A est une vue en perspective d'un deuxième exemple de module propulsif.
La FIG 2B est une vue en contreplongée de l'exemple de la FIG 2A.

### DESCRIPTION DETAILLEE D'EXEMPLE(S) DE REALISATION

Afin de rendre plus concrète l'invention, des exemples de modules sont décrits en détail ci-après, en référence aux dessins annexés. Il est rappelé que l'invention ne se limite pas à ces exemples.

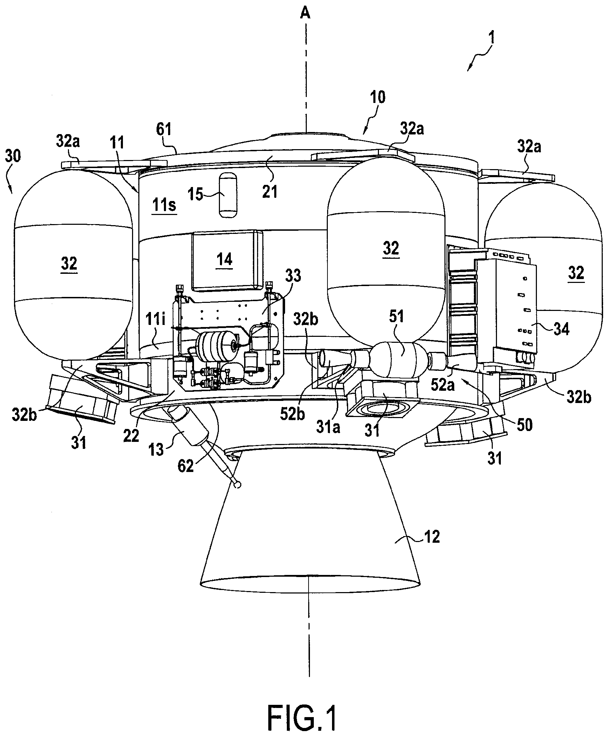

La FIG 1 représente un premier exemple de réalisation d'un module propulsif 1. Celui-ci comporte un propulseur chimique à propergol solide 10 autour duquel sont montés un certain nombre d'organes constitutifs du propulseur électrique 30 ou de fonctions auxiliaires.

Le propulseur chimique à propergol solide 10, également appelé propulseur solide, est globalement symétrique de révolution selon son axe principal A et comprend un corps principal 11, renfermant un chargement de propergol solide, et une tuyère 12 disposée axialement en arrière du corps principal 11.

Cette tuyère 12 est orientable au moyen de deux vérins électromécaniques 13 (dont l'un n'est pas visible sur la FIG 1) disposés à 90° l'un de l'autre autour de la tuyère 12 : ces derniers permettant ainsi de commander la tuyère pour agir sur les composantes de lacet et de tangage de la trajectoire du module 1 et donc de l'engin spatial qu'il équipe. Dans un autre exemple, une configuration à double tuyère, chacune orientée par deux vérins électromécaniques à 90°, pourrait également être utilisée pour assurer le contrôle en roulis de l'engin.

Ces vérins 13 sont commandés par un boîtier de commande des vérins 14 fixé sur la surface latérale du corps principal 11. En outre, une batterie 15 est également fixée sur la surface latérale du corps principal 11 pour alimenter les systèmes du module propulsif 1 lorsque celui-ci ne bénéficie pas de source d'alimentation électrique externe, notamment lorsque les panneaux solaires de l'engin spatial ne sont pas encore déployés.

Le corps principal 11 est réalisé préférentiellement en matériau composite. Pour limiter le nombre de fixations pratiquées dans le corps principal 11 en composite et éviter ainsi au maximum d'endommager ce dernier, le corps principal 11 est muni de deux interfaces de fixations 21 et 22.

La première est une bride de fixation supérieure 21 montée au niveau de l'extrémité supérieure du corps principal 11. Cette bride de fixation supérieure 21, de forme annulaire, est ainsi une pièce rapportée, de préférence en alliage d'aluminium, qui est montée par piontage ou vissage par exemple sur une jupette composite 11s prolongeant la portion de plus fort diamètre du corps principal 11 vers le haut.

La deuxième interface de fixation est une bride de fixation inférieure 22 montée au niveau de l'extrémité inférieure du corps principal 11. Cette bride de fixation inférieure 22, de forme annulaire, est ainsi une pièce rapportée, de préférence en alliage d'aluminium, qui est montée par pointage ou vissage par exemple sur une jupette composite 11i prolongeant la portion de plus fort diamètre du corps principal 11 vers le bas.

Ces deux brides de fixation 21 et 22 permettent la fixation du propulseur électrique 30 sur le propulseur solide 10. Ce propulseur électrique 30 comprend une pluralité de platines de propulsion électrique 31, une pluralité de réservoir de fluide propulsif 32 alimentant les platines de propulsion 31, un dispositif de régulation de pression 33, ainsi qu'un boîtier d'alimentation et de régulation électronique 34, communément appelé PPU (pour « Power Processing Unit »), pour chaque platine de propulsion 31.

Chaque platine de propulsion électrique 31 est du type propulseur à plasma stationnaire : elle consomme du fluide propulsif qu'elle ionise et accélère, sous forme de plasma, grâce à l'action de champs électriques forts généré par la PPU 34 de la platine 31 considérée. Le plasma ainsi éjecté par la platine 31 génère par réaction une poussée accélérant le module 1. Chaque platine 31 est montée sur la bride de fixation inférieure 22 par l'intermédiaire d'une attache 31a de manière à ce qu'elle soit dirigée vers l'arrière du module 1. Elles sont de préférence au nombre de trois réparties à 120° chacune autour de l'axe A. La direction de la poussée de chaque platine de propulsion 31 peut former un petit angle avec la direction portée par l'axe A : dans un tel cas, les directions des poussées de l'ensemble des platines de propulsion 31 concourent en un point de l'axe A préférentiellement situé au centre de gravité de l'ensemble constitué par le module propulsif et l'engin spatial propulsé.

Les réservoirs de fluide propulsifs 32 contiennent le fluide propulsif nécessaire au fonctionnement des platines de propulsion 31 : il s'agit de préférence de xénon. Leur nombre n'est pas forcément égal à celui des platines de propulsion 31 : dans cet exemple de réalisation, le module 1 comporte ainsi quatre réservoirs de fluide propulsif 32 (le quatrième est masqué par le propulseur solide 10). Chaque réservoir de fluide propulsif 32 est fixé, au niveau d'une première extrémité, à la bride de fixation supérieure 21 par l'intermédiaire d'une première attache 32a et, au niveau d'une deuxième extrémité, à la bride de fixation inférieure 22 par l'intermédiaire d'une deuxième attache 32b. Ils sont ainsi disposés de manière sensiblement parallèle à l'axe A et à 90° chacun autour de l'axe A.

Le dispositif de régulation de pression 33 permet de réduire la pression du fluide propulsif avant qu'il n'alimente les platines de propulsion 31. Il est ici prévu en un seul exemplaire fixé sur la bride de fixation inférieure 22. En appoint, il peut également être en partie fixé sur un ou deux longerons montés à leurs extrémités sur les deux brides de fixation 21 et 22.

Chaque boîtier d'alimentation et de régulation électronique 34 permet d'alimenter une platine de propulsion 31 en courants électriques capables de générer des champs électriques suffisamment forts pour assurer le fonctionnement de la platine de propulsion 31. A la manière du dispositif de régulation de pression 33, chaque boîtier d'alimentation et de régulation électronique 34 peut être fixé en partie sur la bride de fixation inférieure 22 et sur des longerons reliant les deux brides de fixation 21 et 22, de préférence à proximité de la platine de propulsion 31 qu'il alimente.

Le module 1 comprend en outre un propulseur à gaz 50 comprenant un réservoir de gaz 51, une première tuyère 52a et une deuxième tuyère 52b dirigée dans la même direction et dans le sens opposé de la première tuyère 52a. Ce propulseur à gaz 50 est fixé sur la bride de fixation inférieure 22 de manière à ce que les deux tuyères 52a, 52b soient disposées tangentiellement par rapport à l'axe A : ce propulseur est ainsi capable d'agir sur la composante de roulis de la trajectoire du module 1.

Dans cet exemple de réalisation, le propulseur à gaz est fixé sur la bride de fixation inférieure 22 par l'intermédiaire de l'attache 31a d'une des platines de propulsion électrique 31 ; il pourrait toutefois être muni d'une attache distincte.

Dans cet exemple de réalisation, le propulseur à gaz 50 utilise du gaz issu de son propre réservoir 51, de l'azote notamment, ou des gaz chauds issus de la combustion d'un bloc de propergol solide ; toutefois, dans d'autres exemples de réalisation, le propulseur à gaz 50 peut être alimenté en gaz provenant des réservoirs de fluide propulsif 32. Dans un tel cas, le dispositif de régulation de pression 33, outre sa fonction principale décrite ci-dessus, peut en outre réduire la pression du fluide propulsif à une pression adaptée pour le propulseur à gaz 50.

De plus, outre leurs fonctions déjà décrites, les brides de fixation supérieure 21 et inférieure 22 sont également configurées pour présenter des interfaces mécaniques supérieure 61 et inférieure 62 conformes aux normes et standards en usage dans le domaine aérospatial afin de permettre la fixation du module 1 à un engin spatial par l'intermédiaire de son interface mécanique supérieure 61 d'une part et à un lanceur par l'intermédiaire de son interface mécanique inférieure 62 d'autre part.

En particulier, dans cet exemple de réalisation, les diamètres des interfaces mécaniques supérieure et inférieure 61, 62 sont identiques de telle sorte que le module 1 peut s'insérer entre un engin spatial et un lanceur sans nécessiter un adaptateur particulier supplémentaire.

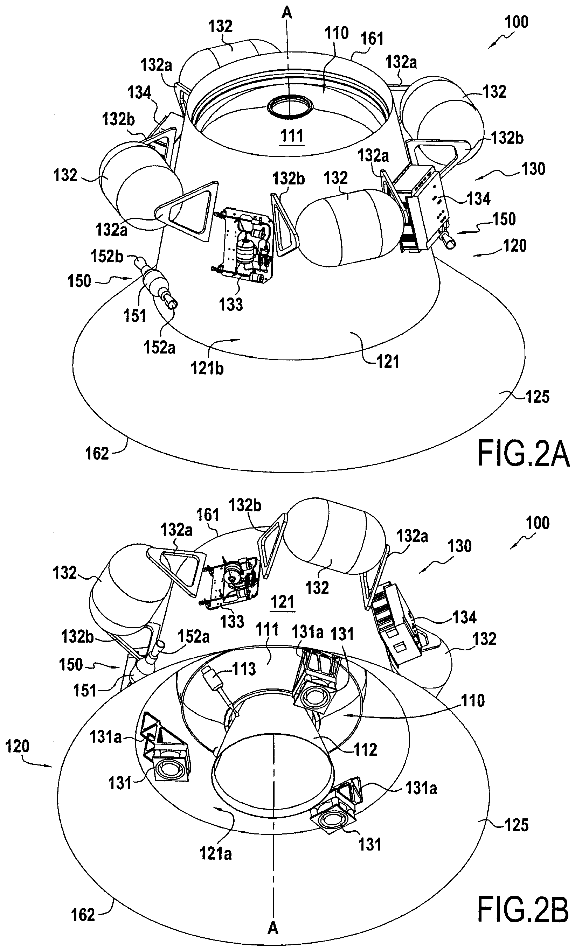

Les FIG 2A et 2B représentent un deuxième exemple de réalisation d'un module propulsif 100. Celui comporte un propulseur chimique à propergol solide 110 autour duquel est monté une structure de châssis 120 sur laquelle sont fixés un certain nombre d'organes constitutifs du propulseur électrique 130 ou de fonctions auxiliaires.

Le propulseur chimique à propergol solide 110, également appelé propulseur solide, est globalement identique au propulseur 10 du premier exemple de réalisation et ne sera donc pas décrit de nouveau en détail.

Afin de limiter le nombre de fixations pratiquées dans le corps principal 111, réalisé de préférence en matériau composite, et éviter ainsi au maximum d'endommager ce dernier, le corps principal 111 est muni de la structure de châssis 120.

Cette structure de châssis 120, de préférence en aluminium et composite polymère renforcé de fibres de carbone (CFRP), peut être montée autour du corps principal 111 par tout moyen de fixation connu, par piontage ou vissage par exemple.

Cette structure de châssis 120, comportant une portion supérieure de support 121 de forme tronconique s'évasant vers l'arrière du module 100, permet la fixation du propulseur électrique 130 sur le propulseur solide 110. Ce propulseur électrique 130 comprend globalement les mêmes organes que le propulseur électrique 30 du premier exemple de réalisation : une pluralité de platines de propulsion électrique 131, une pluralité de réservoirs de fluide propulsif 132 alimentant les platines de propulsion 131, un dispositif de régulation de pression 133, ainsi qu'un boîtier d'alimentation et de régulation électronique (PPU) 134, pour chaque platine de propulsion 131.

Chaque platine 131 est montée sur la face intérieure 121a de la portion de support 121 de la structure de châssis 120 par l'intermédiaire d'une attache 131a de manière à ce qu'elle soit dirigée vers l'arrière du module 1. Elles sont ici encore de préférence au nombre de trois réparties à 120° chacune autour de l'axe A.

Chaque réservoir de fluide propulsif 132 est fixé sur la face extérieure 121b de la portion de support 121 par l'intermédiaire d'une première attache 132a et d'une deuxième attache 132b prévues respectivement au niveau d'une première extrémité et d'une deuxième extrémité du réservoir 132. Dans cet exemple de réalisation, les réservoirs 132 sont disposés dans un plan sensiblement orthogonal à l'axe A et à 90° chacun autour de l'axe A.

Le dispositif de régulation 133 est ici prévu en un seul exemplaire fixé sur la face extérieure 121b de la portion de support 121.

Chaque boîtier d'alimentation et de régulation électronique 134 est également fixé sur la face extérieure 121b de la portion de support 121, de préférence à proximité de la platine de propulsion 131 qu'il alimente.

Le module 100 comprend en outre deux propulseurs à gaz 150, globalement identiques au propulseur à gaz 50 du premier exemple de réalisation, qui comprennent un réservoir de gaz 151, une première tuyère 152a et une deuxième tuyère 152b dirigée dans la même direction et dans le sens opposé de la première tuyère 152a. Chaque propulseur à gaz 150 est fixé sur la face extérieure 121b de la portion de support 121 de manière à ce que les deux tuyères 152a, 152b soient disposées tangentiellement par rapport à l'axe A. En outre, chaque propulseur à gaz 150 est disposé à l'extrémité inférieure de la portion de support 121 afin qu'il bénéficie d'une distance à l'axe A importante et donc d'un bras de levier important pour agir sur la composante de roulis de la trajectoire du module.

De plus, outre ses fonctions déjà décrites, la structure de châssis 120 est également configurée pour présenter des interfaces mécaniques supérieure 161 et inférieure 162 conformes aux normes et standards en usage dans le domaine aérospatial afin de permettre la fixation du module 100 à un engin spatial par l'intermédiaire de son interface mécanique supérieure 161 d'une part et à un lanceur par l'intermédiaire de son interface mécanique inférieure 162 d'autre part. Ainsi, l'extrémité supérieure de la structure de châssis 120 est configurée pour former l'interface mécanique supérieure 161 tandis que la structure de châssis 120 comporte, dans le prolongement et à l'arrière de sa portion supérieure de support 121, une portion inférieure d'adaptation 125, de forme sensiblement tronconique (dont l'angle peut néanmoins différer de celui de la portion de support 121), dont l'extrémité inférieure est configurée pour former l'interface mécanique inférieure 162.

Grâce à cette portion d'adaptation 125, il est possible de régler le diamètre de l'interface mécanique inférieure 162 de manière à ce qu'il corresponde au diamètre standard de l'interface lanceur : dès lors, le diamètre de l'interface mécanique supérieure 161 étant adaptée à l'interface de l'engin spatial, le module 100 peut se substituer à l'adaptateur de transition de diamètre habituellement nécessaire entre les interfaces d'un lanceur et d'un engin spatial tel un satellite.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Module de propulsion spatiale,
**caractérisé en ce qu'**il comprend un propulseur chimique à propergol solide (10), possédant un corps principal (11) réalisé en matériau composite, et au moins un propulseur électrique (30),
et,
**en ce que** le propulseur électrique (30) est monté sur le corps principal (11) du propulseur chimique à propergol solide (10) par l'intermédiaire d'une structure de fixation comprenant une bride supérieure (21), pourvue au niveau de l'extrémité supérieure du corps principal (11) du propulseur chimique à propergol solide (10), et une bride inférieure (22) pourvue au niveau de l'extrémité inférieure du corps principal (11) du propulseur chimique à propergol solide (10).

2. Module selon la revendication 1, **caractérisé en ce que** la bride supérieure (21) est une bride annulaire montée sur une jupe supérieure (11s) du corps principal (11) du propulseur chimique à propergol solide (10) et **en ce que** la bride inférieure (22) est une bride cylindrique montée sur une jupe inférieure (11i) du corps principal (11).

3. Module selon la revendication 1 ou 2, **caractérisé en ce que** le propulseur électrique (30) comprend un organe de propulsion électrique (31) et un réservoir de fluide propulsif (32),
**en ce que** l'organe de propulsion électrique (31) est fixé sur la bride inférieure (22) et orienté de préférence vers l'arrière du module (1), et
**en ce que** le réservoir de fluide propulsif (32) est fixé entre les brides inférieure (22) et supérieure (21).

4. Module selon l'une quelconque des revendications 1 à 3, **caractérisé en ce qu'**il comprend en outre un système de commande d'orientation sur au moins un axe comprenant au moins un propulseur à gaz (50), et
**en ce que** ledit propulseur à gaz (50) est fixé sur la bride inférieure (22) et orienté tangentiellement à ladite bride inférieure (22).

5. Module selon l'une quelconque des revendications 1 à 4, **caractérisé en ce que** la bride supérieure (21) est munie d'une interface mécanique supérieure (61) apte à être connectée à un engin spatial tel un satellite, et
**en ce que** la bride inférieure (22) est munie d'une interface mécanique inférieure (62) apte à être connectée à un lanceur spatial.

6. Module de propulsion spatiale, **caractérisé en ce qu'**il comprend un propulseur chimique à propergol solide (10), possédant un corps principal (11) réalisé en matériau composite, et au moins un propulseur électrique (30),
**en ce que** ledit au moins un propulseur électrique (30) est monté sur ledit corps principal (11) du propulseur chimique à propergol solide (10), et,
**en ce que** le propulseur électrique (130) est monté sur le corps principal (111) du propulseur chimique à propergol solide (110) par l'intermédiaire d'une structure de châssis (120) tronconique ou cylindrique fixée autour du propulseur chimique à propergol solide (110).

7. Module selon la revendication 6, **caractérisé en ce que** le propulseur électrique (130) comprend un organe de propulsion électrique (131) et un réservoir de fluide propulsif (132),
**en ce que** l'organe de propulsion électrique (131) est fixé sur la paroi intérieure (121a) de la structure de châssis (120) et orienté de préférence vers l'arrière du module, et
**en ce que** le réservoir de fluide propulsif (132) est fixé sur la paroi extérieure (121b) de la structure de châssis (120).

8. Module selon la revendication 6 ou 7, **caractérisé en ce qu'**il comprend en outre un système de commande d'orientation sur au moins un axe comprenant au moins un propulseur à gaz (150), et
**en ce que** ledit propulseur à gaz (150) est fixé sur la paroi extérieure (121b) de la structure de châssis (120) et orienté tangentiellement par rapport à la direction principale (A) du module (100).

9. Module selon l'une quelconque des revendications 6 à 8, **caractérisé en ce que** la structure de châssis (120) comprend une portion supérieure de support (121) munie à son extrémité supérieure d'une interface mécanique supérieure (161) apte à être connectée à un engin spatial tel un satellite, et
une portion inférieure tronconique d'adaptation (125), s'évasant depuis la portion supérieure (121), munie à son extrémité inférieure d'une interface mécanique inférieure (162) apte à être connectée à un lanceur spatial.

## Patentansprüche

1. Raumfahrtantriebsmodul,
**dadurch gekennzeichnet, dass** es ein chemisches Festtreibstoff-Triebwerk (10), das einen aus Verbundwerkstoff gefertigten Hauptkörper (11) besitzt, sowie wenigstens ein elektrisches Triebwerk (30) umfasst, und
dass das elektrische Triebwerk (30) an dem Hauptkörper (11) des chemischen Festtreibstoff-Triebwerks (10) mittels einer Befestigungsstruktur angebracht ist, die einen oberen Flansch (21), welcher im Bereich des oberen Endes des Hauptkörpers (11) des chemischen Festtreibstoff-Triebwerks (10) vorgesehen ist, sowie einen unteren Flansch (22), welcher im Bereich des unteren Endes des Hauptkörpers (11) des chemischen Festtreibstoff-Triebwerks (10) vorgesehen ist, umfasst.

2. Modul nach Anspruch 1, **dadurch gekennzeichnet, dass** der obere Flansch (21) ein Ringflansch ist, der an einer oberen Schürze (11s) des Hauptkörpers (11) des chemischen Festtreibstoff-Triebwerks (10) angebracht ist, und dass der untere Flansch (22) ein zylindrischer Flansch ist, der an einer unteren Schürze (11i) des Hauptkörpers (11) angebracht ist.

3. Modul nach Anspruch 1 oder 2, **dadurch gekennzeichnet, dass** das elektrische Triebwerk (30) ein elektrisches Antriebsorgan (31) und einen Treibmitteltank (32) umfasst,
dass das elektrische Antriebsorgan (31) an dem unteren Flansch (22) befestigt ist und vorzugsweise zur Rückseite des Moduls (1) ausgerichtet ist, und
dass der Treibmitteltank (32) zwischen dem unteren (22) und dem oberen (21) Flansch befestigt ist.

4. Modul nach einem der Ansprüche 1 bis 3, **dadurch gekennzeichnet, dass** es ferner ein System zur Ausrichtungssteuerung auf wenigstens einer Achse aufweist, das wenigstens ein Gastriebwerk (50) umfasst, und
dass das Gastriebwerk (50) an dem unteren Flansch (22) befestigt ist und zu dem unteren Flansch (22) tangential ausgerichtet ist.

5. Modul nach einem der Ansprüche 1 bis 4, **dadurch gekennzeichnet, dass** der obere Flansch (21) mit einer oberen mechanischen Schnittstelle (61) ausgestattet ist, die geeignet ist, an ein Raumfahrzeug, wie einen Satelliten, angeschlossen zu werden, und
dass der untere Flansch (22) mit einer unteren mechanischen Schnittstelle (62) ausgestattet ist, die geeignet ist, an eine Trägerrakete angeschlossen zu werden.

6. Weltraumantriebsmodul,
**dadurch gekennzeichnet, dass** es ein chemisches Festtreibstoff-Triebwerk (10), das einen aus Verbundwerkstoff gefertigten Hauptkörper (11) besitzt, sowie wenigstens ein elektrisches Triebwerk (30) umfasst,
dass das wenigstens eine elektrische Triebwerk (30) an dem Hauptkörper (11) des chemischen Festtreibstoff-Triebwerks (10) angebracht ist, und
dass das elektrische Triebwerk (130) an dem Hauptkörper (111) des chemischen Festtreibstoff-Triebwerks (110) mittels einer kegelstumpfförmigen oder zylindrischen Rahmenstruktur (120), die um das chemische Festtreibstoff-Triebwerk (110) herum befestigt ist, angebracht ist.

7. Modul nach Anspruch 6, **dadurch gekennzeichnet, dass** das elektrische Triebwerk (130) ein elektrisches Antriebsorgan (131) und einen Treibmitteltank (132) umfasst,
dass das elektrische Antriebsorgan (131) an der Innenwand (121a) der Rahmenstruktur (120) befestigt ist und vorzugsweise zur Rückseite des Moduls ausgerichtet ist, und
dass der Treibmitteltank (132) an der Außenwand (121b) der Rahmenstruktur (120) angebracht ist.

8. Modul nach Anspruch 6 oder 7, **dadurch gekennzeichnet, dass** es ferner ein System zur Ausrichtungssteuerung auf wenigstens einer Achse aufweist, das wenigstens ein Gastriebwerk (150) umfasst, und
dass das Gastriebwerk (150) an der Außenwand (121b) der Rahmenstruktur (120) befestigt ist und in Bezug auf die Hauptrichtung (A) des Moduls (100) tangential ausgerichtet ist.

9. Modul nach einem der Ansprüche 6 bis 8, **dadurch gekennzeichnet, dass** die Rahmenstruktur (120) einen oberen Tragabschnitt (121) umfasst, der an seinem oberen Ende mit einer oberen mechanischen Schnittstelle (161) ausgestattet ist, die geeignet ist, an ein Raumfahrzeug, wie einen Satelliten, angeschlossen zu werden, und
einen unteren kegelstumpfförmigen Anpassungsabschnitt (125), der sich von dem oberen Abschnitt (121) aus erweitert und an seinem unteren Ende mit einer unteren mechanischen Schnittstelle (162) ausgestattet ist, die geeignet ist, an eine Trägerrakete angeschlossen zu werden.

## Claims

1. A space propulsion module,
**characterized in that** it comprises a solid propellant chemical thruster (10), possessing a main body (11) made in composite material, and at least one electric thruster (30), and
**in that** the electric thruster (30) is mounted on the main body (11) of the solid propellant chemical thruster (10) via a fastener structure comprising a top flange (21) provided at the top end of the main body (11) of the solid propellant chemical thruster (10), and a bottom flange (22) provided at the bottom end of the main body (11) of the solid propellant chemical thruster (10).

2. A module according to claim 1, **characterized in that** the top flange (21) is an annular flange mounted on a top skirt (11s) of the main body (11) of the solid propellant chemical thruster (10) and **in that** the bottom flange (22) is a cylindrical flange mounted on the bottom skirt (11i) of the main body (11).

3. A module according to claim 1 or 2, **characterized in that** the electric thruster (30) comprises an electric thruster member (31) and a tank of propulsion fluid (32),
**in that** the electric thruster member (31) is fastened to the bottom flange (22) and preferably oriented towards the rear of the module (1), and
**in that** the propulsion fluid tank (32) is fastened between the bottom and top flanges (22, 21).

4. A module according to any one of claims 1 to 3, **characterized in that** it further comprises a steering control system for steering about at least one axis and including at least one gas thruster (50), and
**in that** said gas thruster (50) is fastened to the bottom flange (22) and oriented tangentially to said bottom flange (22).

5. A module according to any one of claims 1 to 4, **characterized in that** the top flange (21) is provided with a top mechanical interface (61) suitable for being connected to a spacecraft such as a satellite, and
**in that** the bottom flange (22) is provided with a bottom mechanical interface (62) suitable for being connected to a space launcher.

6. A space propulsion module,
**characterized in that** it comprises a solid propellant chemical thruster (10), possessing a main body (11) made in composite material, and at least one electric thruster (30), and
**in that** said at least one electric thruster (30) is mounted on said main body (11) of the solid propellant chemical thruster (10),
**in that** the electric thruster (130) is mounted on the main body (111) of the solid propellant chemical thruster (110) by means of a frustoconical or cylindrical frame structure (120) fastened around the solid propellant chemical thruster (110).

7. A module according to claim 6, **characterized in that** the electric thruster (130) comprises an electric thruster member (131) and a propulsion fluid tank (132),
**in that** the electric thruster member (131) is fastened to the inside wall (121a) of the frame structure (120) and is preferably oriented towards the rear of the module, and
**in that** the propulsion fluid tank (132) is fastened to the outside wall (121b) of the frame structure (120).

8. A module according to claim 6 or 7, **characterized in that** it further includes a steering control system for steering about at least one axis and including at least one gas thruster (150), and
**in that** said gas thruster (150) is fastened to the outside wall (121b) of the frame structure (120) and oriented tangentially relative to the main direction (A) of the module (100).

9. A module according to any one of claims 6 to 8, **characterized in that** the frame structure (120) includes a top support portion (121) provided at its top end with a top mechanical interface (161) suitable for connecting to a spacecraft such as a satellite, and
a frustoconical bottom adapter portion (125) flaring from the top portion (121) and provided at its bottom end with a bottom chemical interface (162) suitable for being connected to a space launcher.
